# FASCICULE DE BREVET EUROPEEN

(11) **EP 1 167 112 B1**
(45) Date de publication et mention de la délivrance du brevet: **21.07.2010**
(21) Numéro de dépôt: 01401569.7
(22) Date de dépôt: 15.06.2001
(51) Int. Cl.: B60L 11/00, B60M 7/00

(54) **Système d'alimentation en énergie de véhicules à traction électrique**
Energieversorgungssystem für elektrisch betriebene Fahrzeuge
System supplying energy to electrically driven vehicles

(30) Priorité: 19.06.2000 FR 0007805
(43) Date de publication de la demande: 02.01.2002
(73) Titulaire: RENAULT TRUCKS, 69800 Saint Priest (FR)
(72) Inventeur: Baudesson, Anne, 69008 Lyon (FR); Dayre, Eric, 38540 Saint Just Chaleyssin (FR)
(74) Mandataire: Palix, Stéphane

(56) Documents cités:
- EP-A- 0 744 809
- EP-A- 0 968 873
- DE-A- 2 161 266
- FR-A- 1 047 101
- FR-A- 2 336 272

## Description

La présente invention est relative à un système d'alimentation en énergie de véhicules électriques.

Plus particulièrement, l'invention concerne un système d'alimentation destiné à gérer l'alimentation en énergie de véhicules à traction électrique et à stockage d'énergie, destinés à effectuer un parcours régulier jalonné d'arrêts, comme c'est le cas pour les véhicules de transport urbain en service public.

Par US 4 158 802, on connaît un système de charge de la batterie d'accumulateurs rechargeable d'un véhicule électrique par lequel la batterie peut être rechargée au moyen d'une borne de charge fixe se présentant sous la forme d'un portique. Le transfert de l'énergie électrique de la borne fixe vers le véhicule a lieu au moyen de la mise en contact d'électrodes prévues d'une part sur la borne et d'autre part sur le véhicule. Lorsqu'une charge doit être effectuée, le véhicule vient se placer sous le portique de manière que les électrodes puissent se contacter avec la polarité correcte.

Dans ce système connu, il suffit que le conducteur du véhicule place correctement le véhicule sous le portique pour que la charge soit possible. Cependant, ce système ne peut éviter la durée de charge importante habituellement liée à l'utilisation de batteries d'accumulateurs. Pour charger ces dernières, il faut donc immobiliser le véhicule relativement longtemps.

Par FR 2 757 806, on connaît par ailleurs un dispositif d'alimentation d'un véhicule à traction électrique par lequel l'énergie de traction est fournie par la combinaison en série d'une batterie d'accumulateurs et d'une batterie de supercondensateurs, la tension d'alimentation du ou des moteurs de traction étant prélevée soit aux bornes de la batterie d'accumulateurs, soit aux bornes des deux batteries en série. Un dispositif de commutation détermine les deux régimes de fonctionnement en fonction du sens du courant d'alimentation et de la valeur de la tension aux bornes de la batterie de supercondensateurs. Dans ce document, on se préoccupe principalement de gérer efficacement la consommation de l'énergie stockée, notamment en récupérant l'énergie de freinage du véhicule à l'aide des supercondensateurs. En revanche, le document n'aborde pas les problèmes de fourniture de l'énergie électrique aux deux batteries à partir d'une source extérieure.

L'invention a pour but de fournir un système d'alimentation en énergie électrique pour véhicule à traction électrique par lequel la charge du dispositif de stockage d'énergie du véhicule peut être réalisée rapidement et automatiquement, le niveau de charge d'un dispositif de stockage d'énergie à bord du véhicule pouvant être surveillé et régulé étroitement en fonction des besoins en énergie de ce véhicule.

L'invention a donc pour objet un système d'alimentation en énergie électrique comprenant en combinaison, dans au moins un véhicule à traction électrique, un dispositif de stockage d'énergie, et au moins une borne de charge fixe par rapport au sol et des moyens de connexion prévus respectivement sur ledit véhicule et ladite borne pour, lorsque le véhicule est placé au voisinage de la borne, transférer de l'énergie électrique à partir de cette borne vers ledit dispositif de stockage d'énergie,
ladite borne comprenant une batterie de supercondensateurs pouvant être reliée auxdits moyens de connexion pour fournir l'énergie électrique à transférer audit véhicule pendant la présence de celui-ci près de ladite borne, des moyens étant prévus dans celle-ci pour charger ladite batterie de supercondensateurs lorsque le véhicule en est éloigné. (Voir EP-A1-0968873).

Le système d'alimentation en énergie électrique est caractérisé en ce qu'il comprend un calculateur prévu à bord du véhicule et dont la mémoire contient des données concernant le trajet à effectuer par le véhicule, ce calculateur étant agencé pour, à partir de données de localisation qui lui sont appliquées, et des données concernant l'état de charge dudit dispositif de stockage d'énergie, effectuer un premier calcul des besoins en énergie du véhicule pour continuer son parcours après avoir atteint ladite borne pour recevoir une nouvelle charge, ledit calculateur étant également agencé pour définir à partir dudit premier calcul la quantité d'énergie à injecter dans ledit dispositif de stockage d'énergie pendant cette nouvelle opération de charge.

Grâce à ces caractéristiques, la recharge du dispositif de stockage d'énergie à bord du véhicule peut s'effectuer rapidement, puisque les supercondensateurs prévus dans la borne de charge autorisent un courant de charge à transférer au véhicule plus important que celui qui peut être tiré du réseau de distribution d'électricité public. Par ailleurs, la charge des supercondensateurs de la borne de charge peut être réalisée relativement lentement avec un courant plus faible, pendant que le véhicule est éloigné de la borne et participe à la circulation.

Suivant d'autres particularités de l'invention:
- ladite batterie de supercondensateurs est connectée entre un redresseur destiné à être connecté au réseau de distribution public d'électricité et un convertisseur continu/continu destiné à adapter la tension de ladite batterie de supercondensateurs à celle requise pour la charge dudit dispositif de stockage d'énergie dudit véhicule;
- ladite borne de charge comprend une unité de commande de charge et une unité de commande de décharge de ladite batterie de supercondensateurs pour en gérer les cycles de charge/décharge en fonction des besoins en énergie dudit véhicule;
- il comprend des moyens de communication sans fil entre ledit véhicule et ladite borne de charge pour transférer entre eux des données relatives au processus de charge dudit dispositif de stockage d'énergie;
- lesdits moyens de connexion comprennent d'une part sur le véhicule des patins de contact disposés sur le toit du véhicule et d'autre part sur ladite borne de charge des organes frotteurs destinés à venir respectivement en contact avec lesdits patins, lorsque le véhicule se trouve en position de charge près de ladite borne de charge;
- ladite borne de charge comprend une potence dont la branche horizontale porte lesdits organes frotteurs et qui est destinée à s'étendre transversalement au véhicule lorsque celui-ci se trouve en position de charge;
- ledit calculateur est également agencé pour définir ladite quantité d'énergie à injecter en fonction d'un niveau de charge optimal dudit dispositif de stockage d'énergie;
- ledit calculateur est également agencé pour, à l'aide desdits moyens de communication sans fil, transmettre à ladite borne de charge un signal représentatif de ladite quantité d'énergie à injecter et ladite borne de charge comprend des moyens pour, à partir dudit signal représentatif, envoyer la quantité d'énergie à injecter et retourner audit calculateur un signal de fin de charge, lorsque ladite quantité d'énergie à injecter a été transférée;
- il comprend une pluralité de bornes de charge conforme à ladite borne de charge et jalonnant un parcours pour une pluralité de véhicules équipé comme ledit véhicule à traction électrique, ladite pluralité de véhicules desservant une ligne de transport public.

Les caractéristiques et avantages de l'invention apparaîtront au cours de la description qui va suivre donnée uniquement à titre d'exemple et faite en se référant aux dessins annexés sur lesquels:
- la figure 1 représente schématiquement un tronçon d'une ligne de service public de transport en commun desservie par des véhicules à traction électrique devant être parcourue dans un sens et dans l'autre par ces véhicules, cette ligne étant équipée d'un système d'alimentation selon l'invention;
- la figure 2 représente en perspective une partie haute d'un véhicule électrique de transport en commun juste avant d'établir le contact électrique avec un portique de charge (en a), et pendant que le contact est établi pour la charge (en b);
- la figure 3 représente un exemple de réalisation des composants essentiels d'un système d'alimentation selon l'invention pour ce qui concerne un portique de charge et un véhicule à traction électrique faisant partie d'une flotte de véhicules devant parcourir la ligne de service public selon la figure 1;
- la figure 4 représente un diagramme illustrant, en fonction du temps t, les cycles de charge/décharge subis par les dispositifs de stockage d'énergie incorporés dans le système d'alimentation selon l'invention; et
- la figure 5 est un diagramme illustrant le déroulement d'un processus de charge du dispositif de stockage d'énergie d'un véhicule de transport en commun alimenté par un système selon l'invention, lorsqu'il vient effectuer la charge dans un portique de ce système.

Dans ce qui va suivre, on décrira à titre d'exemple, l'application de l'invention à l'alimentation en énergie électrique de véhicules de transport en commun destinés à desservir une ligne régulière de service public, par exemple en milieu urbain. Cependant, il est précisé que l'invention ne se limite pas à cette application. Au contraire, elle peut être mise en oeuvre avec profit lorsqu'il s'agit de l'alimentation de toute flotte de véhicules électriques à usage commercial, voire de l'alimentation d'un seul véhicule à traction électrique auquel cas, le système pourra ne comporter qu'une seule borne de charge.

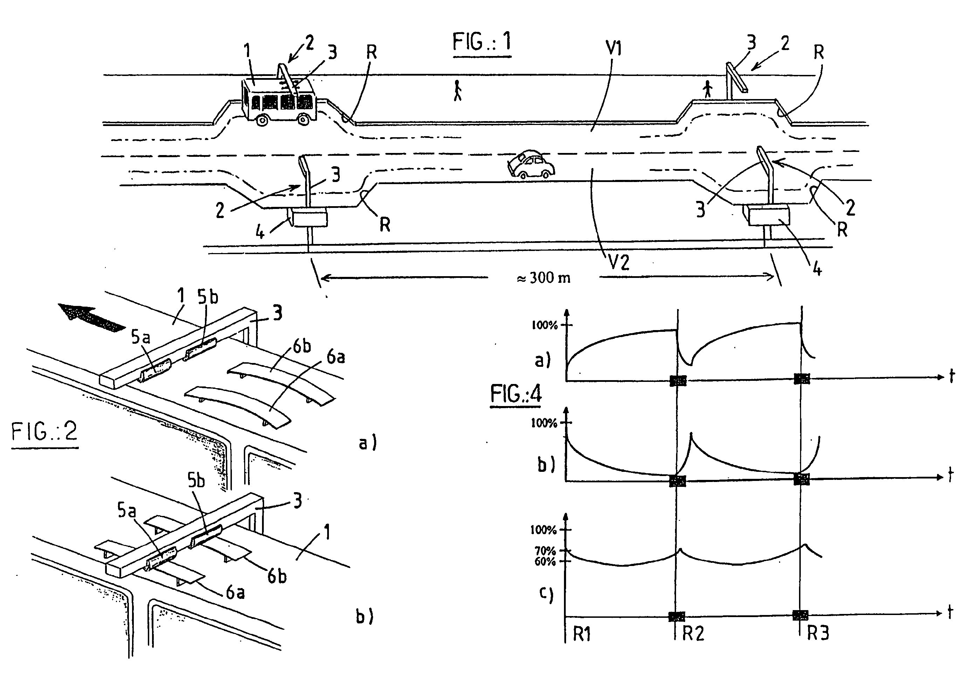

En se référant désormais à la figure 1, on voit représenté un tronçon d'une ligne de transport en commun constitué par une chaussée de circulation à deux voies V1 et V2, une pour chaque sens de circulation. La ligne de transport en commun est jalonnée de refuges R pour permettre, en toute sécurité pour les passagers, les arrêts des véhicules de transport à traction électrique. Sur la figure, l'un des refuges R est occupé par un véhicule 1 à l'arrêt pour permettre la montée et la descente des passagers.

Les refuges R sont équipés de portiques de charge 2 présentant une potence 3 sous laquelle un véhicule peut venir se placer et un coffre 4, de préférence souterrain, dans lequel est logé l'équipement électrique du portique de charge 2. Dans l'exemple représenté, on suppose que les refuges R sont distants d'environ 300 m, valeur qui n'est évidemment pas limitative.

La figure 2 montre que la branche horizontale de la potence 3 est orientée transversalement à la direction de progression du véhicule 1. Elle comprend deux frotteurs 5a, 5b formant électrodes, isolés électriquement et montés espacés l'un de l'autre. Ces frotteurs peuvent avoir la forme de galets par exemple, montés sur ressorts et librement en rotation. Ils sont destinés à coopérer avec des patins 6a et 6b montés avec un même écartement sur le toit de chaque véhicule 1 équipant la ligne de transport en commun. Sur la figure 2, on voit en a) que le véhicule s'apprête à venir en position d'arrêt dans un refuge R et en b) qu'il est à l'arrêt. Dans cette dernière position, les passagers du véhicule peuvent monter et descendre pendant que simultanément, les frotteurs 5a et 5b et les patins 6a et 6b viennent se contacter pour permettre la charge du véhicule 1.

Bien entendu, la connexion entre un véhicule 1 et un portique 2 peut être réalisée par tout autre moyen connu, par exemple par une perche ou un pantographe venant en contact avec des fils aériens tendus dans le sens de la progression du véhicule au-dessus de l'aire du refuge R.

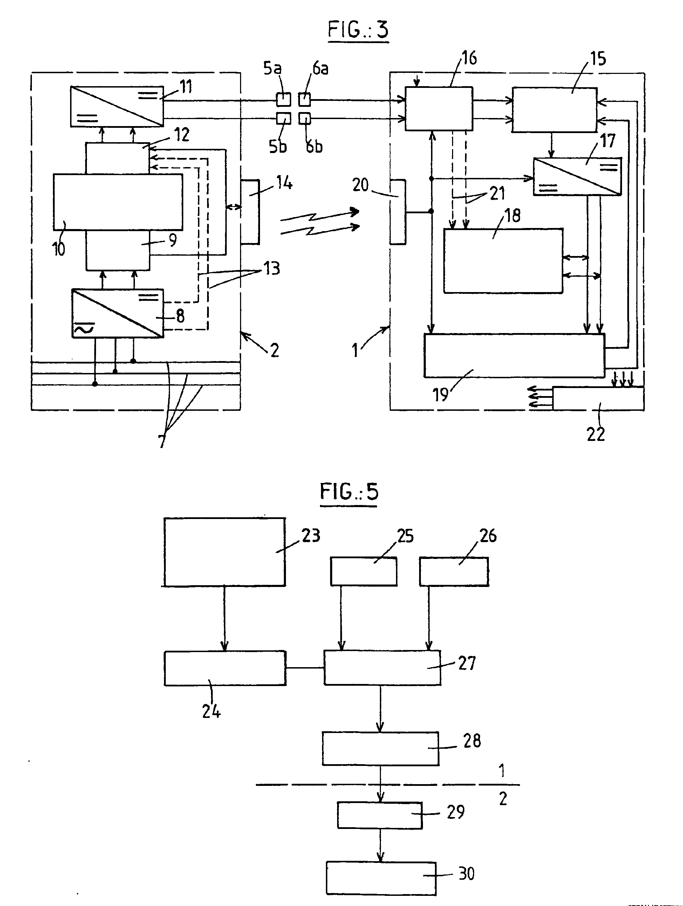

Sur la figure 3, on a représenté un exemple de réalisation des équipements installés respectivement dans le coffre 4 de chaque portique de charge 2 et dans chaque véhicule à traction électrique 1 de la flotte desservant la ligne de transport en commun.

Le coffre 4 est alimenté en énergie électrique à partir du réseau public, par exemple par trois phases 7 du réseau triphasé à 380 Volts. Le réseau alimente un redresseur 8 qui fournit de l'énergie électrique sous une tension continue par l'intermédiaire d'une unité de commande de charge 9 à une batterie de supercondensateurs 10.

Celle-ci peut être déchargée dans un convertisseur continu/continu 11 sous la commande d'une unité de commande de décharge 12. Ce convertisseur 11 est conçu pour adapter la tension de la batterie de supercondensateurs 10 à la tension d'utilisation du véhicule 1.

La sortie bipolaire du convertisseur 11 est raccordée aux frotteurs 5a et 5b de la potence 3.

Au besoin, le redresseur 8 peut alimenter directement le convertisseur continu/continu 11 par l'intermédiaire de la liaison bifilaire 13, prévue facultativement, cette connexion directe pouvant être établie ou rompue par l'unité de commande 12. Dans ce cas, lors d'un transfert d'énergie entre la potence 3 et le véhicule 1, le courant de charge peut provenir en parallèle de la batterie de supercondensateurs 10 et directement du redresseur 8.

Le portique 2 comprend également un émetteur/récepteur 14 destiné à assurer la communication avec le véhicule 1 par une liaison sans fil, par exemple par voie hertzienne.

Dans le mode de réalisation préféré de l'invention, le véhicule à traction électrique 1 comprend une batterie de supercondensateurs 15 qui, par l'intermédiaire d'une unité de commande de charge 16, est raccordée aux patins 6a et 6b du véhicule.

La batterie de supercondensateurs 15 est connectée à un convertisseur continu/continu 17 chargé d'adapter la tension de cette batterie à celle d'une batterie d'accumulateurs 18 du type LI-Ions par exemple, qui est raccordée à la sortie du convertisseur 17. La batterie d'accumulateurs 18 est branchée sur le réseau de bord 19 du véhicule 1 qui alimente le ou les moteurs de traction et tous les auxiliaires électriques de ce dernier. L'état du réseau de bord est mesuré par l'unité de commande de charge 16 et les données correspondantes sont transférées à un émetteur/récepteur 20 qui communique avec l'émetteur/récepteur 14 de la potence 3, lorsque le véhicule 1 se trouve dans la zone de portée de ces émetteurs récepteurs.

Selon une variante plus simple de l'invention, il est possible de ne pas équiper le véhicule de la batterie de supercondensateurs 15, ni du convertisseur 17, moyennant quoi, la batterie d'accumulateur 18 sera directement connectée à l'unité de commande de charge 16 par l'intermédiaire d'une liaison bifilaire 21 représentée en traits mixtes sur la figure 3.

D'après la description qui précède, on comprend que la ou les batteries de stockage d'énergie 15 et 18 du véhicule peut ou peuvent être rechargée(s) à intervalles réguliers le long d'un parcours de la ligne de transport en commun.

Lorsque aucun véhicule n'est présent sous le portique 2, les supercondensateurs 12 sont rechargés par le réseau de distribution 7 par l'intermédiaire du redresseur 8, le courant et la tension de charge étant commandées et surveillées par l'unité de commande de charge 9. Les données relatives à l'état de charge sont également communiquées à l'émetteur/récepteur 14. La recharge des supercondensateurs 10 peut être faite par un courant de charge soigneusement ajusté pour ne pas imposer une sollicitation trop importante au réseau 7 et également en fonction de la fréquence de passage des véhicules sous le portique 2 considéré.

Le véhicule 1 est équipé d'un calculateur de bord 22 qui est destiné notamment à déterminer un certain nombre de paramètres définissant ses besoins en énergie. La figure 5 représente symboliquement au-dessus de la ligne en trait mixte, les calculs qui sont nécessaires à cet effet, la partie en dessous du trait mixte symbolisant certaines opérations de commande essentielles nécessaires pour réaliser la recharge des batteries de stockage d'énergie 15 et 18 du véhicule.

La mémoire du calculateur 22 contient les caractéristiques du trajet du véhicule 1 et le calculateur reçoit un signal de position à l'aide d'un dispositif de localisation GPS (non représenté) dont le véhicule est équipé. Les données correspondantes peuvent éventuellement être obtenues et/ou complétées par une procédure d'apprentissage exécutée pendant plusieurs trajets d'essai effectués par le véhicule sur le parcours prescrit. Elles permettent au calculateur 22, à chaque instant pendant un trajet effectué en exploitation, de déterminer (en 23, figure 5), la distance séparant le véhicule 1 d'un refuge R et également d'autres données de conduite telles que le relief du trajet ou la vitesse commerciale à pratiquer.

A partir de ces données, le calculateur 22 fixe les besoins en énergie du véhicule (en 24) pour le trajet restant à couvrir jusqu'au prochain refuge R.

Le calculateur 22 dispose également en permanence (en 25) des données relatives à l'état de charge des batteries de stockage d'énergie 15 et 18, ainsi que des données (en 26) définissant les paramètres concernant l'état de charge optimal de ces batteries.

A partir des données fournies et du calcul effectué en 24, le calculateur peut déterminer en 27 la quantité d'énergie qui doit être fournie au véhicule 1 au prochain arrêt à un refuge R. Le signal de demande de charge correspondant est envoyé en 28 par le calculateur 22 à l'émetteur/récepteur 20 qui le communique à l'émetteur/récepteur 14 de la potence 3 de ce refuge R dès que les deux émetteurs/récepteurs 14 et 20 se trouvant dans leur zone de portée mutuelle.

A l'approche du refuge R, le véhicule 1 est de préférence guidé par tout moyen approprié tel qu'une caméra vidéo et des marques au sol afin qu'il puisse automatiquement s'insérer dans le refuge R et s'arrêter au moment ou les frotteurs 5a et 5b et les patins 6a et 6b font contact. Un capteur de position (non représenté) peut être prévu pour détecter un mouvement vertical des frotteurs 5a et 5b pour signaler au calculateur 22 que le véhicule est arrivé à la position adéquate pour être chargé. De même, il peut être prévu des moyens de commutation (non représenté) que ne relient les frotteurs au convertisseur 11 que lorsque le signal de position correcte est délivré au calculateur 22.

Le signal de demande de charge est communiqué aux unités de commande 9 et 12 de la potence 3 pour qu'elles déterminent en 29 les paramètres de l'énergie devant être envoyée au véhicule 1 et notamment la valeur du courant de charge et la durée de la charge. Dès que la quantité d'énergie fixée par le calcul est envoyée vers le véhicule 1, un signal de fin de charge est envoyé à ce dernier (en 30) pour lui signifier qu'il peut quitter le refuge R. Ce processus de charge ne demande pas plus de temps que celui nécessaire pour que des passagers puissent monter dans le véhicule et en descendre.

Les graphes de la figure 4 représentent respectivement en a), en b) et en c) et en fonction du temps, un exemple de plusieurs cycles de charge/décharge de la batterie de supercondensateurs 10, de la batterie de supercondensateurs 15 et de la batterie d'accumulateurs 18, la valeur de 100% portée en ordonnées représentant la pleine charge de chacun de ces dispositifs de stockage d'énergie. Les cycles de charges s'étendent dans le temps entre des arrêts à des refuges R1, R2 et R3. On voit que le système d'alimentation de l'invention permet pendant tout le parcours de la ligne, de maintenir les batteries d'accumulateurs 18 du véhicule 1 à un niveau de charge situé entre 60% et 70% ce qui pour une batterie Li-Ions correspondant à un état optimal.

## Revendications

1. Système d'alimentation en énergie électrique comprenant en combinaison dans au moins un véhicule à traction électrique (1), un dispositif de stockage d'énergie (15, 18), et au moins une borne de charge (2) fixe par rapport au sol, des moyens de connexion (5a, 5b, 6a, 6b) étant prévus respectivement sur ledit véhicule (1) et ladite borne (2) pour, lorsque le véhicule est placé au voisinage de la borne, transférer de l'énergie électrique à partir de cette borne vers ledit dispositif de stockage d'énergie (15, 18), ladite borne (2) comprenant une batterie de supercondensateurs (10) pouvant être reliée auxdits moyens de connexion (5a, 5b, 6a, 6b) pour fournir l'énergie électrique à transférer audit véhicule (1) pendant la présence de celui-ci près de ladite borne, des moyens (7, 8, 9) étant prévus dans celle-ci pour charger ladite batterie de supercondensateurs (10), lorsque le véhicule en est éloigné, **caractérisé en ce qu'**il comprend un calculateur (22) prévu à bord du véhicule (1) et dont la mémoire contient des données concernant le trajet à effectuer par le véhicule, ce calculateur (22) étant agencé pour, à partir de données de localisation qui lui sont appliquées, et des données concernant l'état du charge dudit dispositif de stockage d'énergie (15, 18), effectuer un premier calcul des besoins en énergie du véhicule pour continuer son parcours, après avoir atteint ladite borne (2) pour recevoir une nouvelle charge, ledit calculateur (22) étant également agencé pour définir, à partir dudit premier calcul, la quantité d'énergie à injecter dans ledit dispositif de stockage d'énergie (15, 18) pendant cette nouvelle opération de charge.

2. Système d'alimentation selon la revendication 1, **caractérisé en ce que** ledit calculateur (22) est également agencé pour définir ladite quantité d'énergie à injecter en fonction d'un niveau de charge optimal dudit dispositif de stockage d'énergie (15, 18).

3. Système d'alimentation selon l'une quelconque des revendications 1 et 2, **caractérisé en ce qu'**il comprend des moyens de communication sans fil (14, 20) entre ledit véhicule (1) et ladite borne de charge (2) pour transférer entre eux des données relatives au processus de charge dudit dispositif de stockage d'énergie (15, 18).

4. Système d'alimentation selon la revendication 3, **caractérisé en ce que** ledit calculateur (22) est également agencé pour, à l'aide desdits moyens de communication sans fil (14, 20), transmettre à ladite borne de charge (2) un signal représentatif de ladite quantité d'énergie à injecter et **en ce que** ladite borne de charge (2) comprend des moyens (12) pour, à partir dudit signal représentatif, envoyer la quantité d'énergie à injecter et à retourner audit calculateur (22) un signal de fin de charge lorsque ladite quantité d'énergie à injecter a été transférée.

5. Système d'alimentation selon l'une quelconque des revendications 1 à 4, **caractérisé en ce qu'**il comprend une pluralité de bornes de charge (2) conforme à ladite borne de charge et jalonnant un parcours pour une pluralité de véhicules (1) équipé comme ledit véhicule à traction électrique, ladite pluralité de véhicules desservant une ligne de transport public.

## Claims

1. Electric power supply system including in combination in at least one electrified vehicle (1), a power storage device (15, 18), and at least one charge terminal (2) fixed relative to the ground, connection means (5a, 5b, 6a, 6b) being provided on said vehicle (1) and said terminal (2) respectively, so that, when the vehicle is positioned in the vicinity of the terminal, electric power can be transferred from this terminal to said power storage device (15, 18), said terminal (2) including a bank of supercapacitors (10) capable of being connected to said connection means (5a, 5b, 6a, 6b) so that the electric power for transferral can be supplied to said vehicle (1) while it stands near to said terminal, means (7, 8, 9) being provided therein to charge said bank of supercapacitors (10), when the vehicle is at a distance therefrom, **characterized in that** it includes a computer (22) provided on board the vehicle (1) and whereof the memory contains data in relation to the route to be taken by the vehicle, this computer (22) being arranged so that, based on location data applied thereto, and on data in relation to the charge status of said power storage device (15, 18), a first calculation can be made of the power needs of the vehicle in order to continue on its way, after reaching said terminal (2) to receive a new charge, said computer (22) also being arranged so that, based on said first calculation, the quantity of power to be injected into said power storage device (15, 18) during this new charge operation can be specified.

2. Supply system as claimed in claim 1, **characterized in that** said computer (22) is also arranged so that said quantity of power to be injected can be specified as a function of an optimum charge level of said power storage device (15, 18).

3. Supply system as claimed in any one of claims 1 and 2, **characterized in that** it includes wireless communication means (14, 20) between said vehicle (1) and said charge terminal (2) so that data about the process of charging said power storage device (15, 18) can be transferred between them.

4. Supply system as claimed in claim 3, **characterized in that** said computer (22) is also arranged so that, using said wireless communication means (14, 20), a signal representing said quantity of power to be injected can be transmitted to said charge terminal (2) and **in that** said charge terminal (2) includes means (12) so that, from said representative signal, the quantity of power to be injected can be sent and an end-of-charge signal can be returned to said computer (22) when said quantity of power to be injected has been transferred.

5. Supply system as claimed in any one of claims 1 to 4, **characterized in that** it includes a plurality of charge terminals (2) that are in accordance with said charge terminal and stretched out along a route for a plurality of vehicles (1) equipped like said electrified vehicle, said plurality of vehicles serving a public transport line.

## Patentansprüche

1. System zur Versorgung mit elektrischer Energie, umfassend, in Kombination, in mindestens einem elektrisch betriebenen Fahrzeug (1) eine Energiespeichervorrichtung (15, 18) und mindestens einen bezüglich des Bodens feststehenden Ladeanschluss (2), wobei an dem Fahrzeug (1) bzw. an dem Ladeanschluss (2) Verbindungsmittel (5a, 5b, 6a, 6b) vorgesehen sind, um, wenn das Fahrzeug sich in Nähe des Anschlusses befindet, von diesem Anschluss zu der Energiespeichervorrichtung (15, 18) elektrische Energie zu übertragen, wobei der Anschluss (2) eine Superkondensatorbatterie (10) umfasst, die mit den Verbindungsmitteln (5a, 5b, 6a, 6b) verbunden werden kann, um elektrische Energie zu liefern, die während der Anwesenheit des Fahrzeugs (1) bei dem Anschluss zu diesem Fahrzeug zu übertragen ist, wobei in dem Anschluss Mittel (7, 8, 9) vorgesehen sind, um die Superkondensatorbatterie (10) zu laden, wenn das Fahrzeug von ihm entfernt ist, **dadurch gekennzeichnet, dass** es einen Rechner (22) umfasst, der an Bord des Fahrzeugs (1) vorgesehen ist und dessen Speicher Daten enthält, die die von dem Fahrzeug zurückzulegende Fahrstrecke betreffen, wobei dieser Rechner (22) ausgebildet ist, um aus an ihn angelegten Ortungsdaten und aus den Ladezustand der Energiespeichervorrichtung (15, 18) betreffenden Daten eine erste Berechnung des Energiebedarfs des Fahrzeugs durchzuführen, um seine Fahrt fortzusetzen, nachdem es den Anschluss (2) erreicht hat, um eine neue Ladung zu erhalten, wobei der Rechner (22) ferner dafür ausgebildet ist, aus dieser ersten Berechnung die Energiemenge zu bestimmen, die während dieses neuen Ladevorgangs in die Energiespeichervorrichtung (15, 18) einzuspeisen ist.

2. Versorgungssystem nach Anspruch 1, **dadurch gekennzeichnet, dass** der Rechner (22) ferner ausgebildet ist, um diese einzuspeisende Energiemenge in Abhängigkeit von einem optimalen Ladungspegel der Energiespeichervorrichtung (15, 18) zu bestimmen.

3. Versorgungssystem nach einem de Ansprüche 1 und 2, **dadurch gekennzeichnet, dass** es Mittel (14, 20) zur drahtlosen Kommunikation zwischen dem Fahrzeug (1) und dem Ladeanschluss (2) umfasst, um zwischen ihnen den Vorgang der Ladung der Energiespeichervorrichtung (15, 18) betreffende Daten zu übertragen.

4. Versorgungssystem nach Anspruch 3, **dadurch gekennzeichnet, dass** der Rechner (22) ferner ausgebildet ist, um mit Hilfe der drahtlosen Kommunikationsmittel (14, 20) zu dem Ladeanschluss (2) ein Signal zu übertragen, das für die einzuspeisende Energiemenge repräsentativ ist, und dass der Ladeanschluss (2) Mittel (12) umfasst, um ausgehend von diesem repräsentativen Signal die einzuspeisende Energiemenge zu liefern und zum Rechner (22) ein Ladungsendsignal zurückzusenden, wenn die einzuspeisende Energiemenge übertragen wurde.

5. Versorgungssystem nach einem der Ansprüche 1 bis 4, **dadurch gekennzeichnet, dass** es eine Mehrzahl von diesem Ladeanschluss entsprechenden Ladeanschlüssen (2) umfasst, die einen Weg für eine Mehrzahl von Fahrzeugen (1) abstecken, die wie das elektrisch betriebene Fahrzeug ausgerüstet sind, wobei diese Mehrzahl von Fahrzeugen eine öffentliche Verkehrslinie bedienen.
